# EUROPEAN PATENT APPLICATION

(11) **EP 4 667 331 A1**
(43) Date of publication of application: **24.12.2025**
(21) Application number: 25181741.7
(22) Date of filing: 10.06.2025
(51) Int. Cl.: B62D 25/08, B62D 25/20, B62D 29/00

(54) **VEHICLE-BODY STRUCTURE AND METHOD OF MANUFACTURING VEHICLE-BODY STRUCTURE**

(30) Priority: 17.06.2024 JP 2024097322
(71) Applicant: MAZDA MOTOR CORPORATION, Hiroshima 730-8670 (JP)
(72) Inventor: SHIMANAKA, Tsuneki, Aki-gun, Hiroshima, 730-8670 (JP)
(74) Representative: Müller-Boré & Partner Patentanwälte PartG mbB

(57) **Abstract**

A vehicle-body structure includes: a front frame (50) including a right front suspension tower part (51) and a left front suspension tower part (52) integrally molded by casting; a rear frame (100) including a right rear suspension tower part (110) and a left rear suspension tower part (120) integrally molded by casting; and a tunnel frame (170) that couples the front frame (50) and the rear frame (100).

## Description

### [Technical Field]

The present invention relates to a vehicle-body structure of a vehicle, particularly an automobile, for example. The present invention also relates to a method of manufacturing a vehicle-body structure.

### [Background Art]

Patent Literature 1, for example, discloses a vehicle-body structure in which a dash panel and a gusset made of light alloy castings such as aluminum die-casting material are provided at the front of a vehicle body. In this vehicle-body structure, a rear seat cross member made of light alloy casting is provided on a floor panel, and the rear seat cross member and the gusset at the front of the vehicle body are coupled by a backbone.

### [Citation List]

### [Patent Literature]

[Patent Literature 1] Japanese Patent Laid-Open No. 2008-247346

### [Summary]

### [Problems to be Solved]

For an automobile, a suspension tower part to which an upper part of a damper of a suspension apparatus is attached is provided at each of the front and rear, and the left and right of a vehicle body of the automobile. In the case of a general four-wheeled automobile, a total of four suspension tower parts: a right front suspension tower part, a right rear suspension tower part, a left front suspension tower part, and a left rear suspension tower part, are provided. If these four suspension tower parts are molded individually and then integrated into a single structure, the number of components increases.

Moreover, while ensuring the vehicle body rigidity during a frontal collision or a rear-end collision of the automobile has been a major issue, in Patent Literature 1 a rear seat cross member to which the rear of a backbone is coupled is a member disposed in a vehicle cabin, so this member is not capable of sufficiently receiving an impact load input from the rear during a rear-end collision. When an impact load is input from the front during a frontal collision, the load is transmitted to the rear seat cross member through the gusset and the backbone. However, since the rear seat cross member is the member for mounting a rear seat and is of a smaller size among the members constituting the vehicle body, there is a risk that the rear seat cross member may not be able to sufficiently receive the load when the impact load from the front is transmitted to the rear seat cross member.

In view of the above, the objects of the present invention are to reduce the number of components by integrally molding the left and right suspension towers and to ensure sufficient vehicle body rigidity against impact loads from the front and rear directions.

### [Means for Solving the Problems]

The objects are achieved by the invention as defined in independent claims. Particularly, a vehicle-body structure (or a vehicle body) includes a front frame and a rear frame. The vehicle-body structure includes: a front frame including a right front suspension tower part and a left front suspension tower part integrally or unitarily molded e.g., by casting; a rear frame including a right rear suspension tower part and a left rear suspension tower part integrally or unitarily molded e.g., by casting; and a tunnel frame that extends in a vehicle front-rear direction in a tunnel and couples the front frame and the rear frame, the tunnel bulging upward from a floor panel.

According to this configuration, the number of components is reduced since the left and right front suspension tower parts are integrally or unitarily molded and the left and right rear suspension tower parts are integrally or unitarily molded. Since the front frame including the left and right front suspension tower parts and the rear frame including the left and right rear suspension tower parts are coupled by the tunnel frame, an impact load from the front is transmitted from the front frame to the rear frame through the tunnel frame. At this point, the front frame can receive the impact load from the front since the front frame is a large member including the left and right front suspension tower parts. Moreover, since the rear frame is also a large member including the left and right rear suspension tower parts, the rear frame can receive the impact load from the front transmitted through the tunnel frame.

Meanwhile, an impact load from the rear is transmitted from the rear frame to the front frame through the tunnel frame, and at this point the rear frame can receive the impact load from the rear since the rear frame is a large member. Furthermore, since the front frame is also a large member, the front frame can receive the impact load from the rear transmitted through the tunnel frame.

The front frame may have a front coupling part that extends from the right front suspension tower part to the left front suspension tower part, and that couples the right front suspension tower part and the left front suspension tower part. In this case, the front of the tunnel frame can be coupled to the front coupling part. Specifically, if various components are allowed to be disposed inside the tunnel, for example, the height of the tunnel becomes higher and consequently the position of the tunnel frame will rise. However, if the front coupling part couples the upper parts of the front suspension tower parts as in the present configuration, the position of the front coupling part can be raised so as to correspond to the position of the tunnel frame. Consequently, the transmission of impact loads in the front-rear direction is improved.

The rear frame may have a rear coupling part that extends from the right rear suspension tower part to the left rear suspension tower part, and that couples the right rear suspension tower part and the left rear suspension tower part. Moreover, the rigidity of the vehicle body can be improved by positioning the front coupling part, the tunnel frame, and the rear coupling part to pass through the same or substantially the same plane in a side view.

Since the front frame is integrally or unitarily molded with a right front side frame and a left front side frame that extend forward on the right side and the left side, respectively, of a front part of the vehicle body, the number of components in the case of including the front side frames can be reduced. Furthermore, since the right front side frame, the left front side frame, and the tunnel frame are positioned to pass through the same or substantially the same plane in a side view, an impact load from the front can be reliably transmitted to the tunnel frame through the front side frames and the front coupling part.

The tunnel frame may be formed such that the tunnel frame extends in the vehicle front-rear direction along an upper part of the tunnel, and the width of the tunnel frame in the left-right direction increases toward the front side. Consequently, since a wide width can be ensured for the coupling part between the tunnel frame and the front frame, impact loads in the front-rear direction can be reliably transmitted.

The tunnel frame can be fixed to the upper part of the tunnel. In this case, by forming a closed cross-section between the tunnel frame and the upper part of the tunnel, the rigidity of the vehicle body can be further improved.

### [Advantageous Effects of Invention]

As described above, since the front frame including the left and right front suspension tower parts that are integrally or unitarily molded and the rear frame including the left and right rear suspension tower parts that are integrally or unitarily molded are coupled by the tunnel frame, sufficient rigidity against the impact loads can be ensured while reducing the number of components even when an impact load from the front is input or even when an impact load from the rear is input.

### [Brief Description of Drawings]

FIG. 1 is a side view of an automobile having a vehicle-body structure according to an embodiment of the present invention.
FIG. 2 is a plan view of the vehicle-body structure.
FIG. 3 is a bottom view of the vehicle-body structure.
FIG. 4 is a perspective view of a front frame.
FIG. 5 is an enlarged view of a right-side portion of the front frame.
FIG. 6 is a cross-sectional view taken along the VI-VI line of FIG. 5.
FIG. 7 is a cross-sectional view taken along the VII-VII line of FIG. 5.
FIG. 8 is a back view of the front frame.
FIG. 9 is a cross-sectional view taken along the IX-IX line of FIG. 2.
FIG. 10 is a perspective view of a rear framework member.
FIG. 11 is a plan view of the rear framework member.
FIG. 12 is a front view of the rear framework member.
FIG. 13 is a cross-sectional view taken along the XIII-XIII line of FIG. 2.

### [Embodiment for Carrying Out the Invention]

An embodiment of the present invention will be now described in detail based on the drawings. Note that the following description of the preferred embodiment is merely exemplary in nature, and is not intended to limit the present invention, objects to which the present invention is applied, or the applications.

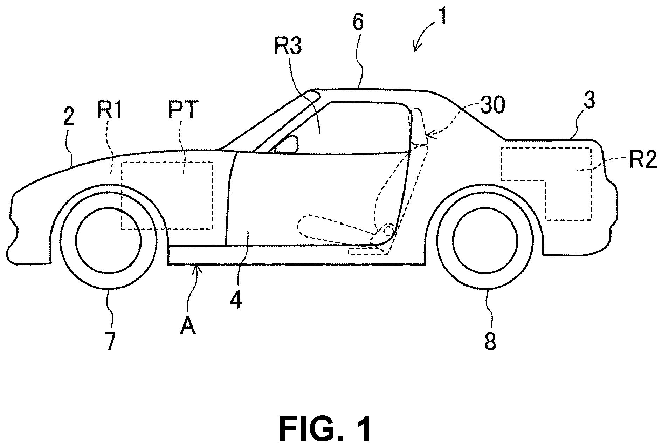

FIG. 1 is a side view of a vehicle, particularly an automobile 1, having a vehicle-body structure A according to the embodiment of the present invention. Note that in the description of this embodiment, the front side of a vehicle will be simply referred to as the "front", the rear side of the vehicle will be simply referred to as the "rear", the right side of the vehicle will be simply referred to as the "right", and the left side of the vehicle will be simply referred to as the "left". The left-right direction of the vehicle is the vehicle width direction.

The automobile 1 is a passenger automobile for example, and may be an automobile of coupe type, hatchback type, or sedan type, for instance. The automobile 1 may be an automobile equipped with an internal combustion engine, which generates driving force to be transmitted to a driving wheel, an electric automobile equipped with a motor for traveling, which generates driving force to be transmitted to a driving wheel, or a hybrid automobile in which driving force to be transmitted to a driving wheel is generated by an internal combustion engine and a driving-force generating motor. The internal combustion engine and/or the motor constitute a powertrain PT.

A bonnet hood 2 may be provided at the front of the automobile 1. A front space R1 in which the powertrain PT is mounted as needed is provided under the bonnet hood 2.

A rear hood 3 may be provided at the rear of the automobile 1. A rear space R2 capable of accommodating luggage may be provided under the rear hood 3.

The powertrain (not shown) may be mounted in the rear space R2 without mounting the powertrain PT in the front space R1. In this case, the front space R1 can be used as a space for accommodating luggage. Powertrains may be mounted in both the front space R1 and the rear space R2.

A left door 4 and a right door (not shown) are provided on the left side and the right side, respectively, of the automobile 1 so as to be able to be opened and/or closed. The vehicle-body structure A of the automobile 1 may have a front wheel 7 and/or a rear wheel 8 on each of the left side and the right side. At least one of the front wheels 7 and the rear wheels 8 can be driving wheels.

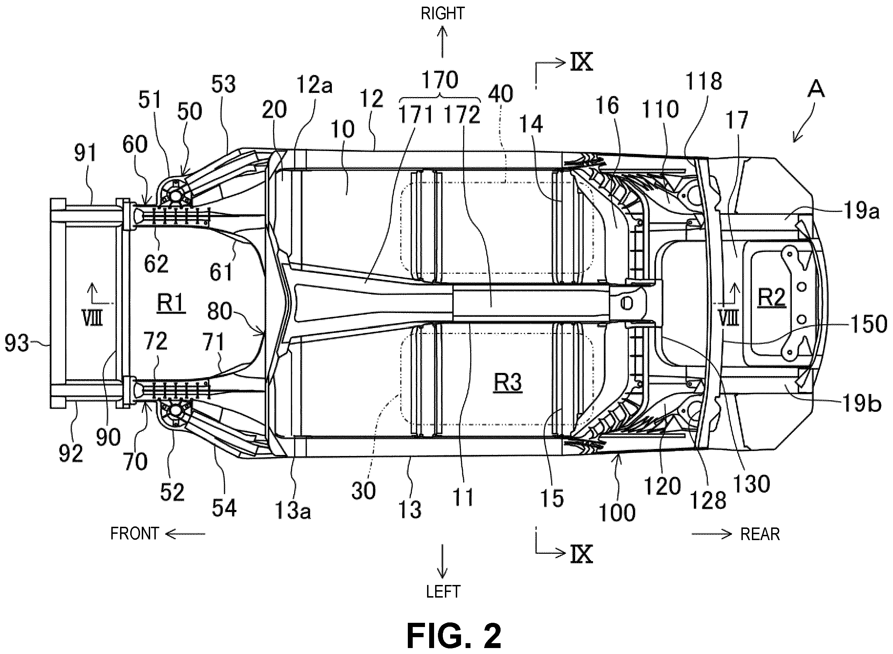

A vehicle cabin R3 that serves as e.g., a living space for occupants is provided between the front space R1 and the rear space R2. As shown in FIG. 2, the vehicle-body structure A of the automobile 1 has a floor panel 10 that forms a floor surface of the vehicle cabin R3, and a dash panel 20 that forms a front wall of the vehicle cabin R3. The vehicle-body structure A may further have an inclined panel 16 that extends upward from a rear end of the floor panel 10 and is inclined so as to be positioned further rearward as it extends upward, and/or a rear panel 17 that extends rearward from an upper end of the inclined panel 16.

A tunnel 11 that bulges upward and extends in the front-rear direction (or a longitudinal direction) may be formed at the center in the left-right direction of the floor panel 10. Therefore, the vehicle-body structure A comprises the tunnel 11. The vehicle-body structure A may further have a right side sill 12 extending in the front-rear direction along a right edge of the floor panel 10, and a left side sill 13 extending in the front-rear direction along a left edge of the floor panel 10.

A right hinge pillar 12a extending upward is provided at the front of the right side sill 12. The right hinge pillar 12a is a member for supporting the right door. A left hinge pillar 13a extending upward may be provided at the front of the left side sill 13. The left hinge pillar 13a is a member for supporting the left door 4.

A front end of the tunnel 11 may be positioned at a front end of the floor panel 10, and a rear end of the tunnel 11 may be positioned at a rear end of the floor panel 10. Consequently, the tunnel 11 has a shape extending continuously from the front end to the rear end of the floor panel 10.

When the automobile 1 is an electric automobile or a hybrid automobile, a power battery (not shown) for supplying electric power to a motor that generates driving force may be accommodated in the tunnel 11. The power battery may be accommodated in the tunnel 11 so as to be aligned in the front-rear direction, or aligned in the up-down direction (or the vertical direction) or the left-right direction. In this case, the tunnel 11 can also be called a battery accommodating section in which the power battery is accommodated.

For example, the vehicle-body structure A has one or more right cross members 14 extending from the right side of the floor panel 10 to a right side surface of the tunnel 11 on an upper surface of the floor panel 10, and one or more left cross members 15 extending from the left side of the floor panel 10 to a left side surface of the tunnel 11 on the upper surface of the floor panel 10. In this embodiment, for example, two right cross members 14 are provided spaced apart from each other in the front-rear direction, and two left cross members 15 are provided spaced apart from each other in the front-rear direction.

The front right cross member 14 and the front left cross member 15 may be disposed so as to be aligned on the same straight line extending in the left-right direction. The rear right cross member 14 and the rear left cross member 15 may be disposed so as to be aligned on the same straight line extending in the left-right direction.

For example, each of the right cross members 14 is formed along the upper surface of the floor panel 10 on the right side of the tunnel 11, and is fixed to the upper surface of the floor panel 10. A right end of the right cross member 14 may be fixed to a side surface on the vehicle interior side of the right side sill 12, while a left end of the right cross member 14 may be fixed to the right-side surface of the tunnel 11.

Particularly, each of the left cross members 15 is formed along the upper surface of the floor panel 10 on the left side of the tunnel 11, and is fixed to the upper surface of the floor panel 10. A left end of the left cross member 15 may be fixed to a side surface on the vehicle interior side of the left side sill 13, while a right end of the left cross member 15 may be fixed to the left-side surface of the tunnel 11.

For example, the automobile 1 is a right-hand drive vehicle. Therefore, the automobile 1 may have a passenger seat 30 as a left-side seat (seat) and a driver's seat 40 as a right-side seat (seat) on the left side and the right side, respectively, of the tunnel 11 on the floor panel 10.

Particularly, the passenger seat 30 is provided on the left side of the tunnel 11 on the floor panel 10, and the passenger seat 30 is disposed between the tunnel 11 and the left side sill 13. The driver's seat 40 is provided on the right side of the tunnel 11 on the floor panel 10, and the driver's seat 40 is disposed between the tunnel 11 and the right side sill 12. Consequently, the passenger seat 30 and the driver's seat 40 are arranged side by side in the left-right direction with the tunnel 11 interposed therebetween.

A lower part of the driver's seat 40 (or the passenger seat 30) may be attached to the two right cross members 14. A lower part of the passenger seat 30 (or the driver's seat 40) may be attached to the two left cross members 15.

Note that the automobile 1 may also be a left-hand drive vehicle, in which case the driver's seat 40 may be provided on the left side and the passenger seat 30 on the right side. In addition, a rear seat may be provided behind the driver's seat 40 and the passenger seat 30.

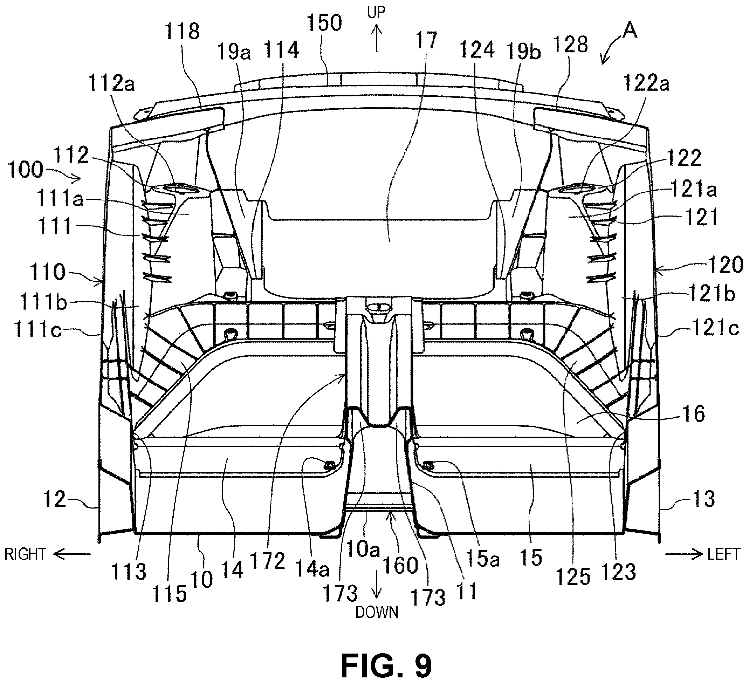

The vehicle-body structure A has a tunnel member 10a (shown in FIG. 9) that extends across the tunnel 11 in the left-right direction e.g., on a lower surface of the floor panel 10. The tunnel member 10a may be positioned under the rear right cross member 14 and left cross member 15, and may be a reinforcement member for preventing the tunnel 11, which is open downward, from being deformed to open in the left-right direction.

The right side of the tunnel member 10a may extend further to the right than the right side surface of the tunnel 11, and is positioned to overlap with the left side of the right cross member 14 in a plan view. The right side of the tunnel member 10a and the left side of the right cross member 14 may be integrated by being fixed to the floor panel 10 by, for example, a fastening member 14a.

The left side of the tunnel member 10a may extend further to the left than the left side surface of the tunnel 11, and is positioned to overlap with the right side of the left cross member 15 in a plan view. The left side of the tunnel member 10a and the right side of the left cross member 15 may be integrated by being fixed to the floor panel 10 by, for example, a fastening member 15a. In other words, the right cross member 14 and the left cross member 15 are coupled through the tunnel member 10a and form a single reinforcement member.

For example, the dash panel 20 extends from the front end of the floor panel 10 upward and in the left-right direction, and is a member for partitioning the vehicle cabin R3 from the front space R1 positioned forward of the vehicle cabin R3. The front end of the tunnel 11 may be connected to the center in the left-right direction of a lower portion of the dash panel 20.

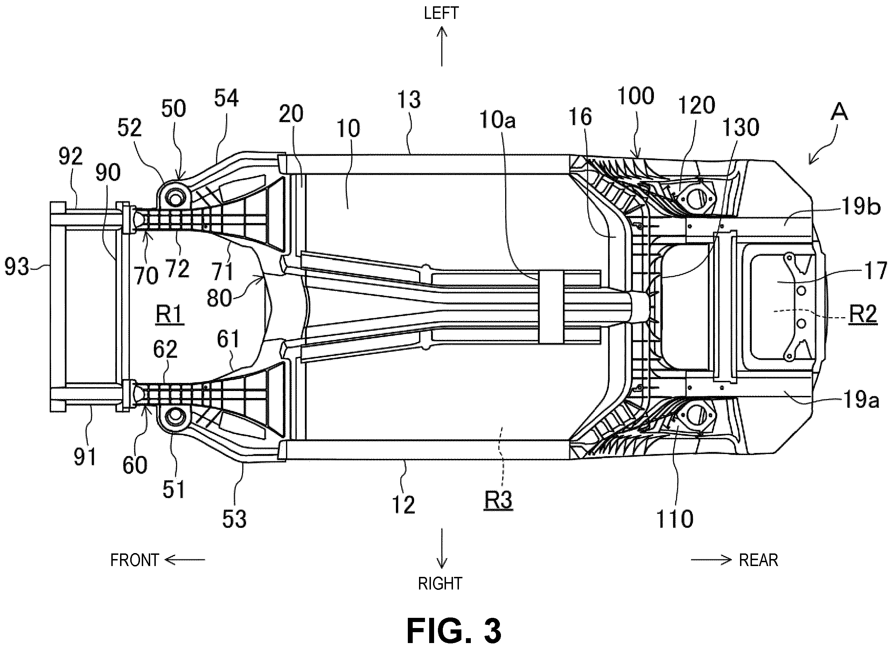

As shown in FIG. 2 and FIG. 3, the vehicle-body structure A has a front frame 50. The front frame 50 is provided at the front of the automobile 1 and/or constitutes a front vehicle-body framework member. The front frame 50 has a right front suspension tower part 51, a left front suspension tower part 52, a right front side frame 60, a left front side frame 70, and a front coupling part 80.

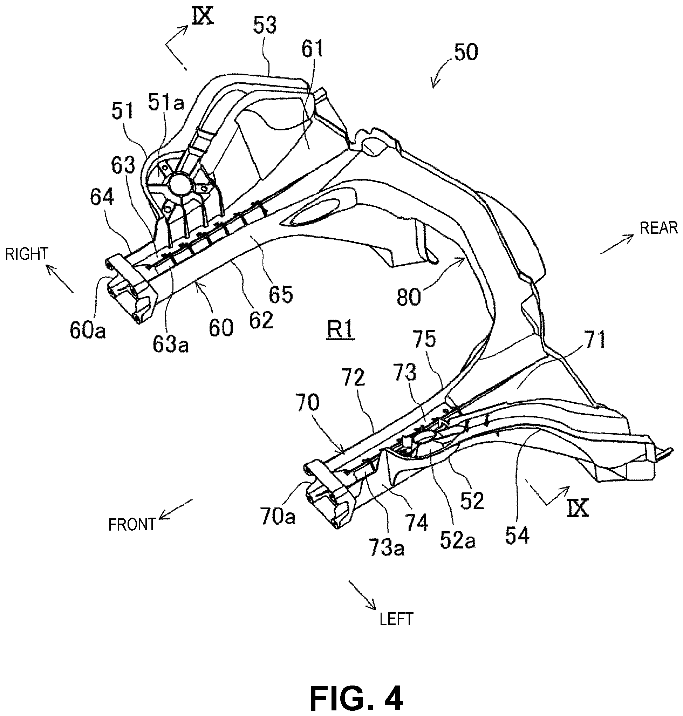

As shown in FIG. 4, the right front suspension tower part 51, the left front suspension tower part 52, the right front side frame 60, the left front side frame 70, and the front coupling part 80 are integrally or unitarily molded by casting, and consequently the front frame 50 is obtained as a single component. An example of a specific method for manufacturing the front frame 50 can be a die casting of an aluminum alloy, for example. Note that the right front side frame 60 and the left front side frame 70 may also be separately cast.

For example, the right front suspension tower part 51 and the left front suspension tower part 52 are portions to which an upper part of a right front damper and an upper part of a left front damper of a front suspension device (not shown) are attached, respectively. The right front suspension tower part 51 may be connected to the upper part of a front portion 62 of the right front side frame 60. The right front suspension tower part 51 may have a right front damper attaching part 51a to which the upper part of the right front damper is attached. A rear part of the right front suspension tower part 51 may be connected to a rear part of the right front side frame 60 by a left connection part 53.

For example, the left front suspension tower part 52 is connected to the upper part of a front portion 72 of the left front side frame 70. The left front suspension tower part 52 may have a left front damper attaching part 52a to which the upper part of the left front damper is attached. A rear part of the left front suspension tower part 52 may be connected to a rear part of the left front side frame 70 by a right connection part 54.

The front coupling part 80 is a portion that extends from the right front suspension tower part 51, particularly the upper part of the right front suspension tower part 51, to the left front suspension tower part 52, particularly the upper part of the left front suspension tower part 52, and that couples the right front suspension tower part 51 and the left front suspension tower part 52. The rear of the front coupling part 80 may be fixed to the front of the dash panel 20 and the tunnel 11. When fixing the right front side frame 60, the left front side frame 70, and the front coupling part 80 to the dash panel 20 and the tunnel 11, it is possible to use various fixing methods, such as fixing by welding, fastening and fixing using fastening members (including, for example, self-piercing rivets), and only any one of these fixing methods may be used, or any two or more fixing methods may be used in combination.

For example, the right front side frame 60 extends in the front-rear direction on the right side relative to the center in the left-right direction at the front of the automobile 1, and e.g., on the lower side of the front coupling part 80. The left front side frame 70 extends in the front-rear direction on the left side relative to the center in the left-right direction at the front of the automobile 1, and e.g., on the lower side of the front coupling part 80. Note that the front coupling part 80 may be coupled to the right front suspension tower part 51 through the rear part of the right front side frame 60, or may be coupled to the left front suspension tower part 52 through the rear part of the left front side frame 70.

The right front side frame 60 and the left front side frame 70 may be disposed at the same height. The front space R1 is provided between the right front side frame 60 and the left front side frame 70 in front of the front coupling part 80.

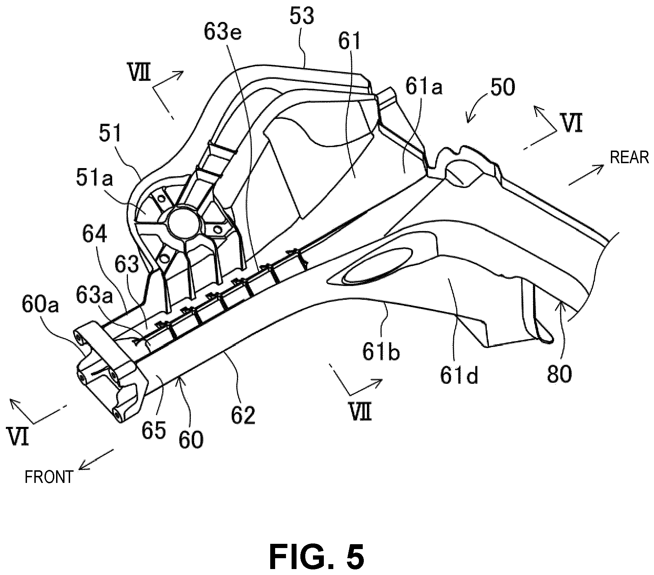

As shown in FIG. 2 and FIG. 3, a front cross member 90 extending in the left-right direction may be provided forward of the front frame 50 of the automobile 1. For example, as shown in FIG. 4 to FIG. 6, a right recess 60a for fitting the front cross member 90 is formed so as to be recessed rearward in the front part of the right front side frame 60. Particularly, as shown in FIG. 4, a left recess 70a for fitting the front cross member 90 is formed so as to be recessed rearward at the front part of the left front side frame 70.

A right-side portion of the front cross member 90 may be fixed to the front part of the right front side frame 60 in the state of being fitted in the right recess 60a of the right front side frame 60, and a left-side portion of the front cross member 90 may be fixed to the front part of the left front side frame 70 in the state being fitted in the left recess 70a of the left front side frame 70. Consequently, the front part of the right front side frame 60 and the front part of the left front side frame 70 are coupled by the front cross member 90. The front cross member 90 may be positioned to overlap with the front part of the right front side frame 60 and the front part of the left front side frame 70 in a front view.

For example, a right crush can 91 and a left crush can 92 are provided at the front part of the front cross member 90 of the automobile 1. The right crush can 91 is fixed to the right-side portion of the front cross member 90, and has a tubular or cylindrical shape extending forward from the right-side portion of the front cross member 90. The left crush can 92 is fixed to the left-side portion of the front cross member 90, and has a tubular or cylindrical shape extending forward from the left-side portion of the front cross member 90. The right crush can 91 and the left crush can 92 are positioned to overlap with the front part of the right front side frame 60 and the front part of the left front side frame 70, respectively, in a front view.

A bumper reinforcement member 93 extending in the left-right direction may be provided at the front of the right crush can 91 and the left crush can 92 of the automobile 1. A right-side portion of the bumper reinforcement member 93 is fixed to the front part of the right crush can 91, and a left-side portion of the bumper reinforcement member 93 is fixed to the front part of the left crush can 92. Consequently, the front part of the right crush can 91 and the front part of the left crush can 92 are coupled by the bumper reinforcement member 93.

The bumper reinforcement member 93 may be positioned to overlap with the front part of the right front side frame 60 and the front part of the left front side frame 70 in a front view. Note that the front cross member 90, the right crush can 91, the left crush can 92, and the bumper reinforcement member 93 are provided as needed, and are not essential members for the present invention.

The right front side frame 60 and the left front side frame 70 may have a bilaterally symmetrical structure. For example, when an imaginary line passing through the center of the automobile 1 in the left-right direction and extending in the up-down direction is the center of symmetry, the left front side frame 70 is line-symmetrical to the right front side frame 60, and the right front side frame 60 is line-symmetrical to the left front side frame 70. As the right front side frame 60 and the left front side frame 70 thus have a bilaterally symmetrical structure, the structure of the right front side frame 60 will be described in detail below and the left front side frame 70 will only be briefly explained.

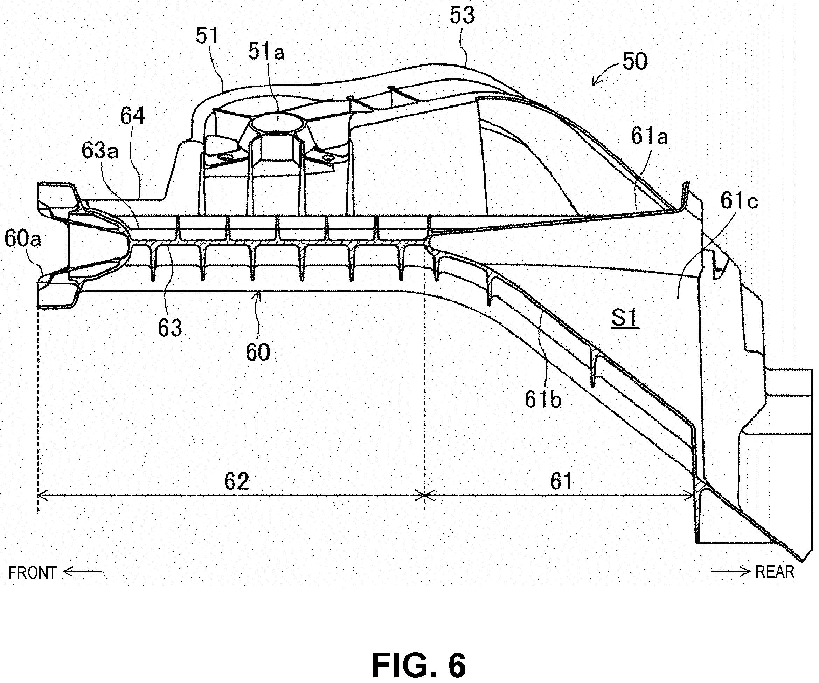

FIG. 6 is a cross-sectional view cut along a plane extending in the up-down direction (or the vertical direction) and passing along a straight line extending in the longitudinal direction (front-rear direction) of the right front side frame 60. As shown in FIG. 6, the right front side frame 60 can be divided into a rear portion 61 and a front portion 62.

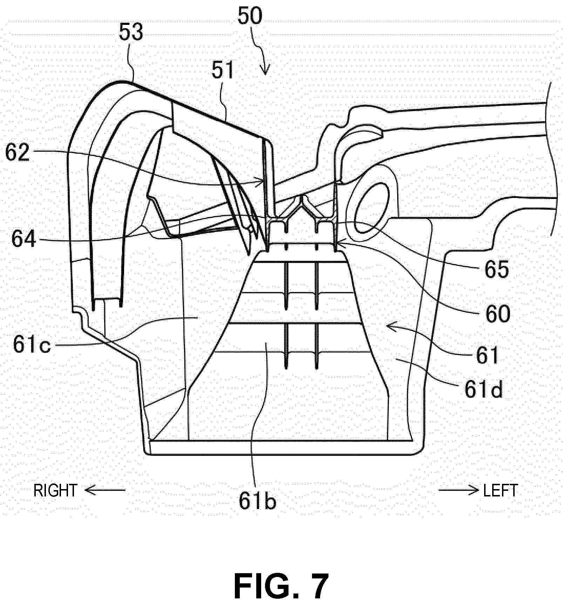

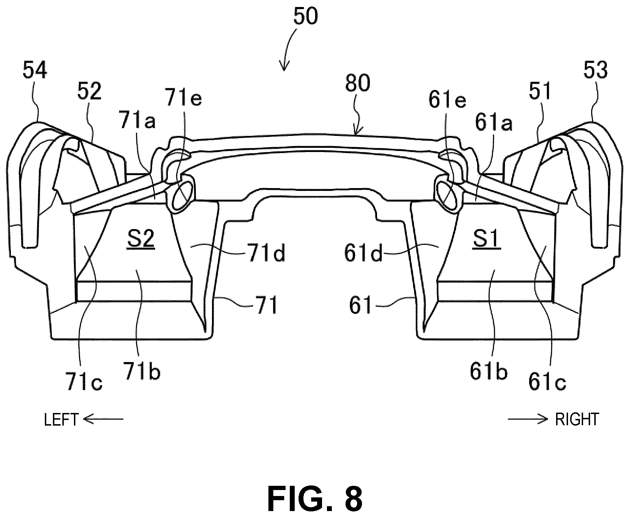

The rear portion 61 may be a cone-shaped portion having a hollow section S1 formed in a hollow shape. On the other hand, the front portion 62 may be a portion having a cross-sectional shape similar to an H-shape as shown in FIG. 7. As shown in FIG. 4, the left front side frame 70 may include a rear portion (cone-shaped portion) 71 having a hollow section S2 (shown in FIG. 8) formed in a hollow shape, and a front portion 72 having a cross-sectional shape similar to an H-shape.

As a mold (not shown) for molding the front frame 50, a mold that is opened and closed in the up-down direction can be used, for example. In this case, the hollow sections S1, S2 are portions that are difficult to mold using such a mold since the hollow sections S1, S2 are open to the rear. Therefore, a sliding mold (not shown) that is movable in the front-rear direction of the front frame 50 may be set when molding the hollow sections S1, S2.

As shown in FIG. 6, the rear portion 61 of the right front side frame 60 may be open rearward. FIG. 8 is a back view of the front frame 50 when the rear portion 61 is viewed from the rear, that is, the open side.

For example, as shown in FIG. 6 and FIG. 8, the rear portion 61 has an upper wall part 61a, a lower wall part 61b, an outer wall part 61c, and an inner wall part 61d. The upper wall part 61a, the lower wall part 61b, the outer wall part 61c, and the inner wall part 61d form the hollow section S1 that is open rearward.

The upper wall part 61a constitutes an upper portion of the rear portion 61, and extends in the front-rear direction and the left-right direction. The lower wall part 61b constitutes a lower portion of the rear portion 61, extends in the front-rear direction and the left-right direction, and may be inclined or curved such that the lower wall part 61b is positioned lower as it extends toward the rear side. Consequently, a dimension (or a length) in the up-down direction of the hollow section S1 of the rear portion 61 becomes longer toward the rear side. In order to correspond to the inclined shape or curved shape of the lower wall part 61b, a dimension in the up-down direction of each of the outer wall part 61c and the inner wall part 61d increases toward the rear side.

The outer wall part 61c and the inner wall part 61d extend in the front-rear direction and the up-down direction. The outer wall part 61c is formed such that the outer wall part 61c is positioned more outward (right side) in the vehicle width direction as it extends toward the rear side. The inner wall part 61d is formed such that the inner wall part 61d is positioned more inward (left side) in the vehicle width direction as it extends toward the rear side. Consequently, the rear portion 61 of the right front side frame 60 may be formed so that the dimension in the left-right direction increases toward the rear side.

Thus, the shape of a vertical cross-section orthogonal to the front-rear direction of the rear portion 61 may be largest at the rear of the rear portion 61, and consequently the rear portion 61 is a cone-shaped part in which the vertical cross-section orthogonal to the front-rear direction gradually widens toward the rear side. Since the portion with the largest vertical cross-section is fixed to the dash panel 20, the strength and/or rigidity of fixing the right front side frame 60 to the dash panel 20 can be enhanced.

As shown in FIG. 8, like the rear portion 61 of the right front side frame 60, the rear portion 71 of the left front side frame 70 may have an upper wall part 71a, a lower wall part 71b, an outer wall part 71c, and an inner wall part 71d. Therefore, the portion with the largest vertical cross-section in the left front side frame 70 can be fixed to the dash panel 20, and the strength and/or rigidity of fixing the left front side frame 70 to the dash panel 20 can be enhanced.

Next, the structure of the front portion 62 of the right front side frame 60 will be described. As shown in FIG. 7, when the front portion 62 is viewed along the front-rear direction, the front portion 62 has a horizontal plate 63, a right vertical plate 64, and a left vertical plate 65.

The horizontal plate 63 may extend forward from the front of the rear portion 61 in the front-rear direction and may also extend in the left-right direction. For example, the width direction of the horizontal plate 63 is the left-right direction, the longitudinal direction of the horizontal plate 63 is the front-rear direction, and the thickness direction of the horizontal plate 63 is the up-down direction.

Particularly, the right vertical plate 64 is continuous with a right end (one end in the width direction) of the horizontal plate 63 and extends to both sides in the thickness direction of the horizontal plate 63. The left vertical plate 65 is continuous with a left end (another end in the width direction) of the horizontal plate 63 and extends to both sides in the thickness direction of the horizontal plate 63. Thus, the right vertical plate 64 and the left vertical plate 65 extend upward beyond an upper surface of the horizontal plate 63 and extend downward beyond a lower surface of the horizontal plate 63, and consequently the front portion 62 has a cross-sectional shape similar to an H-shape.

The right vertical plate 64 and the left vertical plate 65 may be parallel or may not be parallel to each other. Particularly, since a draft angle of the mold is usually set for the right vertical plate 64 and the left vertical plate 65, these plates are thinner toward the upper side and the lower side; however, it may be possible to omit the draft angle and make the thickness uniform from top to bottom. The rear parts of the right vertical plate 64 and the left vertical plate 65 are continuous with the front part of the rear portion 61.

The horizontal plate 63 has a bulging part 63a that bulges in the thickness direction of the horizontal plate 63 and extends in the left-right direction. The bulging part 63a is positioned e.g., at the center in the left-right direction of the horizontal plate 63, and may bulge upward which is one direction in the thickness direction of the horizontal plate 63. Note that the bulging part 63a may also bulge downward, which is the other direction in the thickness direction of the horizontal plate 63.

As shown in FIG. 4, when the front portion 72 of the left front side frame 70 is viewed along the front-rear direction, the front portion 72 may have a horizontal plate 73, a right vertical plate 74, and a left vertical plate 75. The horizontal plate 73 may be formed with a bulging part 73a.

For example, during a frontal collision, a rearward impact load is input to the right front side frame 60. Since the right front side frame 60 which has received the impact load has a cross-sectional shape similar to an H-shape and the hollow rib-like bulging part 63a, the right front side frame 60 can have buckling deformation without bending. Consequently, the right front side frame 60 can receive the impact load. The same can be said for the left front side frame 70.

As shown in FIG. 2 and FIG. 3, the vehicle-body structure A has a rear frame 100. The rear frame 100 is provided at the rear of the automobile 1 and/or constitutes a rear vehicle-body framework member.

For example, as shown in FIG. 9, the rear frame 100 having a right rear suspension tower part 110, a left rear suspension tower part 120, and a rear coupling part 130 is provided e.g., above the inclined panel 16. In the rear frame 100, the right rear suspension tower part 110 and the left rear suspension tower part 120 are integrally or unitarily molded by casting, and the rear coupling part 130 is also integrally or unitarily molded by casting. An example of a specific method for manufacturing the rear frame 100 can be a die casting of an aluminum alloy, as with the front frame 50.

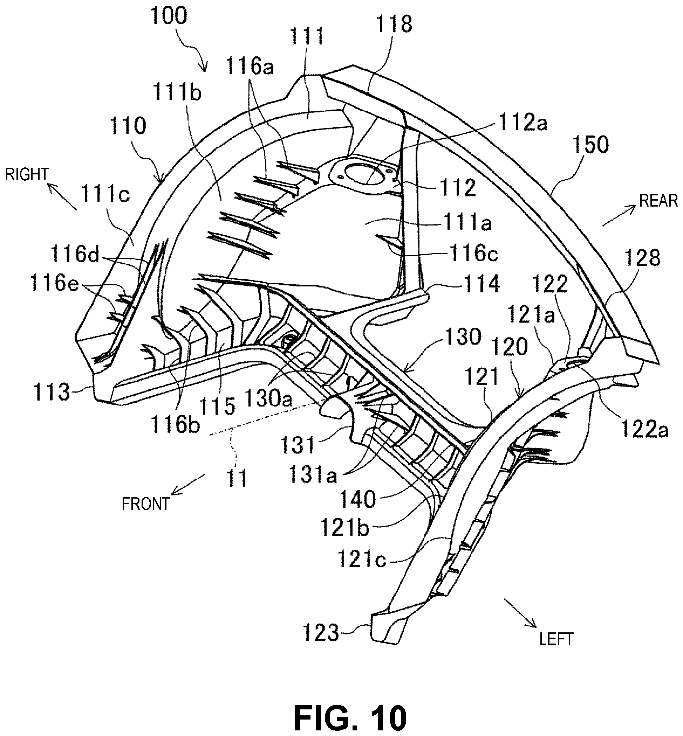

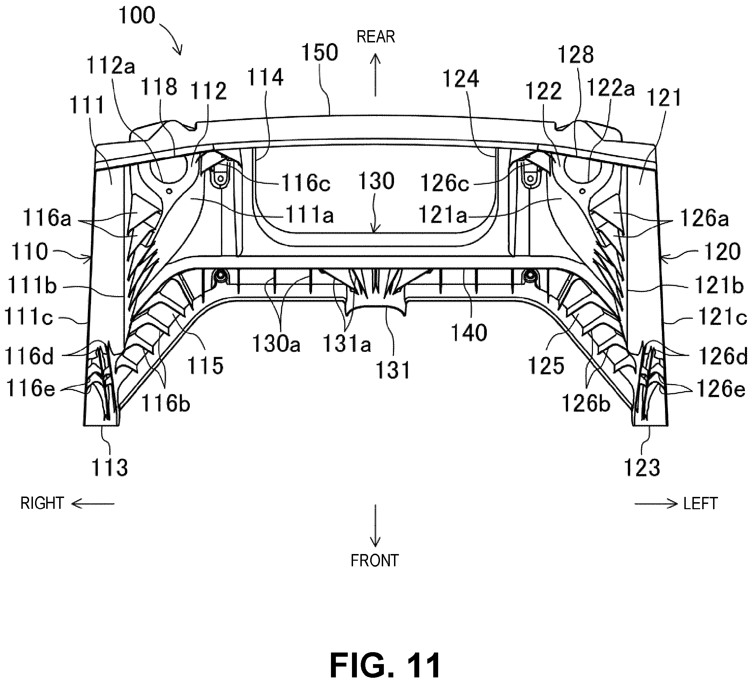

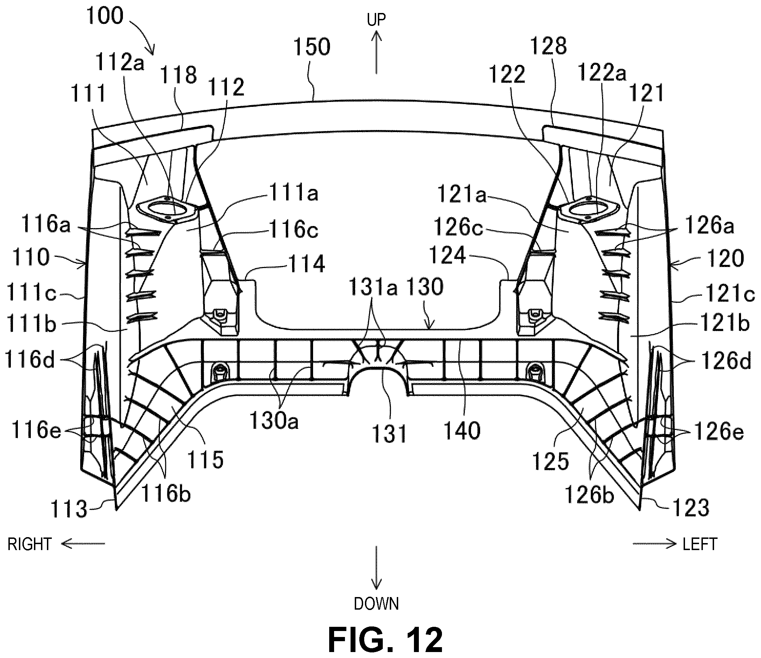

As shown in FIG. 10 to FIG. 12, the rear coupling part 130 is a portion that is provided e.g., in the middle part of the rear frame 100 in the left-right direction, extends from the right rear suspension tower part 110 to the left rear suspension tower part 120, and couples the right rear suspension tower part 110 and the left rear suspension tower part 120.

As shown in FIG. 2, the front end of a right rear frame 19a extending rearward may be connected to the rear part of the right rear suspension tower part 110. For example, the right rear frame 19a is disposed on the vehicle interior side relative to the right side sill 12, and is positioned higher than the right side sill 12.
The front end of a left rear frame 19b extending rearward may be connected to the rear part of the left rear suspension tower part 120.

For example, the left rear frame 19b is disposed on the vehicle interior side relative to the left side sill 13, and is positioned higher than the left side sill 13. A rear panel 17 may be provided to connect the right rear frame 19a and the left rear frame 19b. The vehicle or the vehicle-body structure A may include the right rear frame 19a and/or the left rear frame 19b.

As shown in FIG. 10 to FIG. 12, the right rear suspension tower part 110 may have a right wheelhouse part 111 that forms a wheelhouse for a right rear wheel (not shown). The right wheelhouse part 111 extends in the up-down direction and the front-rear direction, and has a recessed shape recessed toward the inside and front of the vehicle. For example, the rear side and the lower side of the right wheelhouse part 111 are both open, and consequently the right wheelhouse part 111 has a dome shape.

The right wheelhouse part 111 may include a right bulging part 111a that bulges toward the vehicle interior side, and/or a right plate part 111b that extends in the up-down direction and the front-rear direction from the top to the front of the right bulging part 111a. A right damper attaching part 112 is provided near the top of the right bulging part 111a.

For example, the right damper attaching part 112 is a plate-like portion to which an upper part of a right rear damper of a rear suspension apparatus (not shown) is attached, and extends in the front-rear direction and the left-right direction. An opening 112a is formed in the right damper attaching part 112.

A right flange part 111c may be formed at a peripheral edge of the right plate part 111b. The right flange part 111c extends continuously from the upper part through the front part to the lower part of the right wheelhouse part 111.

In a front lower part of the right wheelhouse part 111, a right front connection part 113 to be connected to the rear end of the right side sill 12 may be formed. Moreover, in a rear lower part of the right wheelhouse part 111, a right rear connection part 114 to be connected to the rear end of the right rear frame 19a may be formed. The right rear connection part 114 is positioned on the vehicle interior side and/or the upper side relative to the right front connection part 113.

A right load transmission part 115 extending from the right front connection part 113 to the right rear connection part 114 may be provided at a lower part of the right wheelhouse part 111. For example, the right load transmission part 115 is inclined such that the right load transmission part 115 is positioned outward and downward of the vehicle as it extends toward the front side.

The left rear suspension tower part 120 and the right rear suspension tower part 110 may have a bilaterally symmetrical structure. For example, when an imaginary line passing through the center in the left-right direction of the automobile 1 and extending in the up-down direction is the center of symmetry, the left rear suspension tower part 120 is line-symmetrical to the right rear suspension tower part 110, and the right rear suspension tower part 110 is line-symmetrical to the left rear suspension tower part 120.

That is, the left rear suspension tower part 120 may have a left wheelhouse part 121 that forms a wheelhouse for a left rear wheel 8 (shown in FIG. 1). The left wheelhouse part 121 extends in the up-down direction and the front-rear direction, and has a recessed shape recessed toward the inside and front of the vehicle. For example, the rear side and the lower side of the left wheelhouse part 121 are both open, and consequently the left wheelhouse part 121 has a dome shape.

The left wheelhouse part 121 may include a left bulging part 121a that bulges toward the vehicle interior side, and a left plate part 121b that extends in the up-down direction and the front-rear direction from the top to the front of the left bulging part 121a. A left damper attaching part 122, to which an upper part of a left damper of the rear suspension apparatus is attached, may be provided near the top of the left bulging part 121a. The left damper attaching part 122 has an opening 122a.

A left flange part 121c may be formed at a peripheral edge of the left plate part 121b. The left flange part 121c extends continuously from the upper part of the left wheelhouse part 121 through the front part to the lower part.

In a front lower part of the left wheelhouse part 121, a left front connection part 123 to be connected to the rear end of the left side sill 13 may be formed. Moreover, in a rear lower part of the left wheelhouse part 121, a left rear connection part 124 to be connected to the rear end of the left rear frame 19b may be formed. The left rear connection part 124 is positioned on the inner side and upper side of the vehicle relative to the left front connection part 123.

A left load transmission part 125 extending from the left front connection part 123 to the left rear connection part 124 may be provided at a lower part of the left wheelhouse part 121. For example, the left load transmission part 125 is inclined such that the left load transmission part 125 is positioned outward and downward of the vehicle as it extends toward the front side.

Therefore, an impact load during a rear-end collision, for example, is input to the right wheelhouse part 111 through the right rear frame 19a. The impact load input to the right wheelhouse part 111 is transmitted to the right side sill 12 through the right rear connection part 114, the right load transmission part 115, and the right front connection part 113.

Furthermore, the impact load during the rear-end collision is input to the left wheelhouse part 121 through the left rear frame 19b. The impact load input to the left wheelhouse part 121 is transmitted to the left side sill 13 through the left rear connection part 124, the left load transmission part 125, and the left front connection part 123.

Thus, since the rear frame 100 is a member that receives the impact load during the rear-end collision and transmits the impact load to the right side sill 12 and the left side sill 13, the rear frame 100 needs to have enhanced rigidity for the input of the impact load. Therefore, one or more ribs are integrally or unitarily molded with the rear frame 100.

A first right inner rib 116a, a second right inner rib 116b, a third right inner rib 116c, a fourth right inner rib 116d, and a fifth right inner rib 116e are integrally or unitarily molded on the vehicle interior side of the right wheelhouse part 111. Although detailed description is omitted, a plurality of ribs 126a to 126e are integrally or unitarily molded on the vehicle interior side of the left wheelhouse part 121, as with the right wheelhouse part 111.

The rear coupling part 130 extends in the left-right direction e.g., from the right rear suspension tower part 110, particularly the middle part in the front-rear direction of the lower part of the right rear suspension tower part 110, to the left rear suspension tower part 120, particularly the middle part in the front-rear direction of the lower part of the left rear suspension tower part 120. On the front surface of the rear coupling part 130, a plurality of first lower ribs 130a protruding forward and/or extending in the up-down direction may be provided spaced apart from each other in the left-right direction.

Particularly, a curved plate part 131 that is curved upward is provided at the center of the rear coupling part 130 in the left-right direction. On the front surface of the curved plate part 131, a plurality of second lower ribs 131a protruding upward and extending forward may be provided spaced apart from each other in the circumferential direction of the curved plate part 131.

For example, the rear of the tunnel 11 of the floor panel 10 is connected to the curved plate part 131 of the rear coupling part 130. Consequently, the rear coupling part 130 can be coupled to the tunnel 11 having high rigidity.

The rear frame 100 may have a long rib 140 that is continuous from the right rear suspension tower part 110 to the rear coupling part 130 and to the left rear suspension tower part 120. A right-side portion of the long rib 140 may be integrally or unitarily molded with the front portions of the right bulging part 111a and the right plate part 111b. A left-side portion of the long rib 140 may be integrally or unitarily molded with the front portions of the left bulging part 121a and the left plate part 121b.

The vehicle-body structure A has an upper coupling member 150 that extends in the left-right direction at a position spaced apart from the rear coupling part 130, e.g., by a predetermined distance, in the front-rear direction and/or the up-down direction, and that couples the right side and the left side of the rear frame 100. The upper coupling member 150 of this embodiment may be a member that couples the upper part of the right rear suspension tower part 110 and the upper part of the left rear suspension tower part 120, and can be called a deck member or the like. Consequently, the upper coupling member 150 is spaced apart upward from the rear coupling part 130 and also spaced apart rearward from the rear coupling part 130.

In other words, a right coupling part 118, to which the right side of the upper coupling member 150 can be coupled, may be provided at the upper part of the right rear suspension tower part 110. For example, the right coupling part 118 is spaced apart upward from the right damper attaching part 112, and has a plate shape extending in the left-right direction. The right side of the upper coupling member 150 is fixed to the right coupling part 118 by welding or a fastening member.

Further particularly, a left coupling part 128, to which the left side of the upper coupling member 150 can be coupled, may be provided at the upper part of the left rear suspension tower part 120. For example, the left coupling part 128 is spaced apart upward from the left damper attaching part 122, and has a plate shape extending in the left-right direction. The left side of the upper coupling member 150 is fixed to the left coupling part 128 e.g., by welding or a fastening member.

Although not shown in the drawings, the upper coupling member 150 may be a header that is disposed at a position spaced apart upward from the upper parts of the right rear suspension tower part 110 and the left rear suspension tower part 120.

The right cross member 14, the left cross member 15 and the tunnel member 10a shown in FIG. 9 may be a lower coupling member 160 that couples the lower part of the right rear suspension tower part 110 and the lower part of the left rear suspension tower part 120. For example, the right side of the right cross member 14 is fixed to the right side sill 12 and the right front connection part 113 formed at the lower part of the right rear suspension tower part 110 is connected to the right side sill 12, so that the right side of the right cross member 14 is coupled to the right front connection part 113 of the right rear suspension tower part 110 through the right side sill 12. Likewise, for example, the left side of the left cross member 15 is fixed to the left side sill 13 and the left front connection part 123 formed at the lower part of the right rear suspension tower part 120 is connected to the left side sill 13, so that the left side of the left cross member 15 is coupled to the left front connection part 123 of the left rear suspension tower part 120 through the left side sill 13. Note that the right side of the right cross member 14 may be directly coupled to the lower part of the right rear suspension tower part 110, and/or the left side of the left cross member 15 may be directly coupled to the lower part of the left rear suspension tower part 120.

For example, the lower coupling member 160 is spaced apart downward from the rear coupling part 130 and is also spaced apart forward from the rear coupling part 130. Therefore, in a front view, the rear coupling part 130 is disposed between the upper coupling member 150 and the lower coupling member 160. Furthermore, in a plan view, the rear coupling part 130 is disposed between the upper coupling member 150 and the lower coupling member 160.

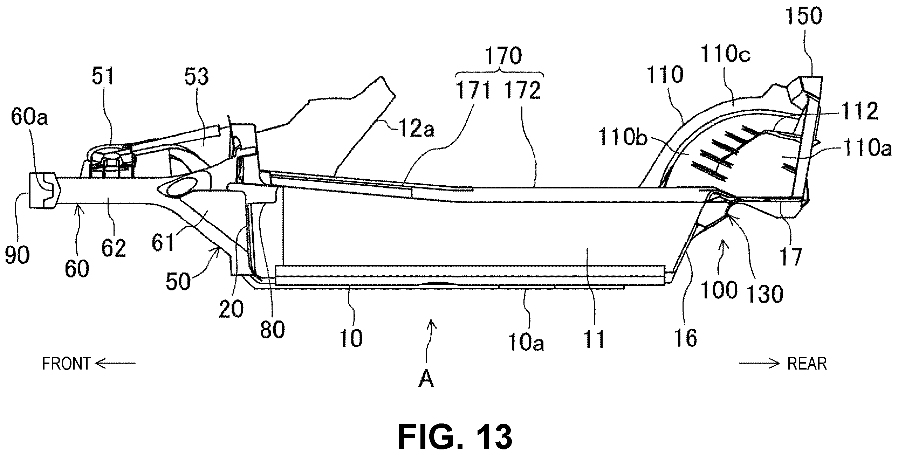

As shown in FIG. 2, the vehicle-body structure A has a tunnel frame 170 that extends in the front-rear direction in the tunnel 11, and couples the front frame 5 and the rear frame 100. For example, as shown in FIG. 13, the tunnel frame 170 extends in the front-rear direction along the upper part of the tunnel 11 and/or is fixed to the upper part of the tunnel 11.

The tunnel frame 170 may have a structure divided at the middle in the front-rear direction, and/or may have a front-side frame (or a front tunnel frame) 171 constituting a front portion of the tunnel frame 170, and a rear-side frame (or a rear tunnel frame) 172 constituting a rear portion of the tunnel frame 170. The front-side frame 171 and the rear-side frame 172 are made of, for example, press-molded plate material. Particularly, the front of the rear-side frame 172 is connected to the rear of the front-side frame 171.

Note that the tunnel frame 170 may be divided into three or more members in the front-rear direction, or may be formed of a single member continuous from the front to the rear. Moreover, the tunnel frame 170 may be, for example, an extruded member or a cast member other than a press-molded product. Further, a portion of the tunnel 11 may be the tunnel frame 170, in which case the tunnel 11 can be formed of a tunnel main body bulging upward from the floor panel 10, for example, and a tunnel frame integrated with the upper part of the tunnel main body.

As shown in FIG. 2, the front-side frame 171 may be formed such that its width in the left-right direction increases toward the front side. As shown in FIG. 13, the front of the front-side frame 171 may extend until reaching the rear of the front coupling part 80 of the front frame 50, and may be fixed in the state of being coupled to the rear of the front coupling part 80. Consequently, a wide width can be ensured for the coupling part between the tunnel frame 170 and the front frame 50, so that the coupling strength and/or rigidity can be enhanced and an impact load in the front-rear direction can be reliably transmitted.

The front-side frame 171 and the front coupling part 80 may be directly coupled together, or may be coupled through another member. Moreover, the front of the front-side frame 171 may also be coupled to and fixed to the dash panel 20. Various fixing methods such as the above-mentioned fastening and fixing, and welding can be used when fixing the tunnel frame 170.

The rear of the rear-side frame 172 may extend until reaching the front of the rear coupling part 130 of the rear frame 100, and may be fixed in the state of being coupled to the front of the rear coupling part 130. The rear-side frame 172 and the rear coupling part 130 may be directly coupled together, or may be coupled through another member.

For example, as shown in FIG. 9, one or more closed cross-sections 173 are formed between the rear-side frame 172 of the tunnel frame 170 and the tunnel 11, particularly the upper part of the tunnel 11. Further particularly, both sides in the left-right direction and the center in the left-right direction of the rear-side frame 172 are fixed to the outer surface of the tunnel 11, and each of the portion between the left side and the center of the rear-side frame 172 and the portion between the right side and the center of the rear-side frame 172 bulges upward. Consequently, two closed cross-sections 173 may be provided spaced apart from each other in the left-right direction between the rear-side frame 172 and the upper part of the tunnel 11. Note that there may be only one closed cross-section 173. Further, a closed cross-section (not shown) similar to that on the rear side may be formed between the front-side frame 171 and the upper part of the tunnel 11.

As shown in FIG. 13, in this embodiment, the front-side frame 171 may be disposed in an inclined manner or a slightly inclined manner such that the front-side frame 171 is positioned higher as it extends toward the front side; however, when the tunnel frame 170 is viewed as a whole, the tunnel frame 170 may extend in a straight line or substantially a straight line in the front-rear direction. The front coupling part 80 of the front frame 50, the tunnel frame 170, and the rear coupling part 130 of the rear frame 100 may be positioned to pass through the same or substantially the same plane in a side view. The term "substantially the same plane" means that the middle part in the up-down direction of the rear of the front coupling part 80 and the middle part in the up-down direction of the front of the rear coupling part 130 are included in a height range from the upper end to the lower end of the rear frame 100 in the up-down direction.

Consequently, when a rearward impact load acting on the front frame 50 is transmitted from the tunnel frame 170 to the rear frame 100, for example, it is possible to cause the impact load to act on the tunnel frame 170 in a buckling direction, and therefore the rearward impact load acting on the front frame 50 can be reliably transmitted to the rear frame 100. Similarly, when a forward impact load acting on the rear frame 100 is transmitted from the tunnel frame 170 to the front frame 50, it is possible to cause the impact load to act on the tunnel frame 170 in a buckling direction, and therefore the forward impact load acting on the rear frame 100 can be reliably transmitted to the front frame 50. In other words, the positional relationship in the up-down direction among the front coupling part 80, the tunnel frame 170, and the rear coupling part 130 is set to cause the impact loads acting from the front and rear directions to act on the tunnel frame 170 in a buckling direction. Note that the front-side frame 171 may extend horizontally or substantially horizontally in the front-rear direction.

Furthermore, the right front side frame 60 and the left front side frame 70 of the front frame 50 and the tunnel frame 170 may be positioned to pass through the same or substantially the same plane in a side view. In other words, the positions of the right front side frame 60 and the left front side frame 70 in the up-down direction and the position of the rear of the front coupling part 80 in the up-down direction are the same or substantially the same.

Consequently, since the right front side frame 60, the left front side frame 70, the rear of the front coupling part 80, and the tunnel frame 170 are disposed at the same or substantially the same position in the up-down direction, it is possible to cause a rearward impact load to act on the tunnel frame 170 in a buckling direction from the right front side frame 60 and the left front side frame 70 through the front coupling part 80.

### (Functions and Effects of the Embodiment)

As described above, since in the present embodiment the right front suspension tower part 51 and the left front suspension tower part 52 are integrally or unitarily molded in the state of being coupled by the front coupling part 80, the number of components of the front frame 50 can be reduced. Moreover, since the right rear suspension tower part 110 and the left rear suspension tower part 120 are integrally or unitarily molded in the state of being coupled by the rear coupling part 130, the number of components of the rear frame 100 can be reduced.

Since the front frame 50 including the right front suspension tower part 51 and the left front suspension tower part 52 and the rear frame 100 including the right rear suspension tower part 110 and the left rear suspension tower part 120 are coupled by the tunnel frame 170, an impact load from the front is transmitted from the front frame 50 through the tunnel frame 170 to the rear frame 100. At this point, the front frame 50 can receive the impact load from the front because the front frame 50 is a large member including the left and right front suspension tower parts 51, 52. Moreover, the rear frame 100 can receive the impact load transmitted through the tunnel frame 170 since the rear frame 100 is also a large member including the left and right rear suspension tower parts 110, 120.

On the other hand, an impact load from the rear is transmitted from the rear frame 100 to the front frame 50 through the tunnel frame 170, and at this point the rear frame 100 can receive the impact load from the rear since the rear frame 100 is a large member. Furthermore, since the front frame 50 is a large member, the front frame 50 can receive the impact load transmitted through the tunnel frame 170. Consequently, the vehicle-body structure A can ensure sufficient rigidity against the impact loads.

The above-described embodiment is merely illustrative in all respects, and should not be interpreted in a limiting manner. Furthermore, modifications and changes belonging to the equivalent scope of the claims are all within the scope of the present invention.

### [Industrial Applicability]

As described above, the vehicle-body structure according to the present invention can be applied to, for example, automobiles.

### [Reference Signs List]

- 1: automobile
- 10: floor panel
- 11: tunnel
- 50: front frame
- 51: right front suspension tower part
- 52: left front suspension tower part
- 80: front coupling part
- 100: rear frame
- 110: right rear suspension tower part
- 120: left rear suspension tower part
- 130: rear coupling part
- 170: tunnel frame
- 173: closed cross-section
- A: vehicle-body structure

## Claims

1. A vehicle-body structure (A) comprising:
a floor panel (10);
a tunnel (11);
a front frame (50) including a right front suspension tower part (51) and a left front suspension tower part (52) integrally or unitarily molded by casting;
a rear frame (100) including a right rear suspension tower part (110) and a left rear suspension tower part (120) integrally or unitarily molded by casting; and
a tunnel frame (170) that extends in a vehicle front-rear direction in the tunnel (11) and couples the front frame (50) and the rear frame (100), the tunnel (11) bulging upward from the floor panel (10).

2. The vehicle-body structure (A) according to claim 1, wherein
the front frame (50) is integrally or unitarily molded with a front coupling part (80) that extends from an upper part of the right front suspension tower part (51) to an upper part of the left front suspension tower part (52) and that couples the right front suspension tower part (51) and the left front suspension tower part (52), and
a front part of the tunnel frame (170) is coupled to the front coupling part (80).

3. The vehicle-body structure (A) according to claim 1 **or 2,** wherein
the rear frame (100) is integrally or unitarily molded with a rear coupling part (130) that extends from the right rear suspension tower part (110) to the left rear suspension tower part (120) and that couples the right rear suspension tower part (110) and the left rear suspension tower part (120).

4. The vehicle-body structure (A) according to claim 3 referring to claim 2, wherein
the front coupling part (80), the tunnel frame (170), and the rear coupling part (130) are positioned to pass through a same or substantially a same plane in a side view.

5. The vehicle-body structure (A) according to any one of the preceding claims, wherein
the front frame (50) is integrally or unitarily molded with a right front side frame (60) and a left front side frame (70) that extend forward on a right side and a left side, respectively, of a front part of a vehicle body, and
the right front side frame (60), the left front side frame (70), and the tunnel frame (170) are positioned to pass through a same or substantially a same plane in a side view.

6. The vehicle-body structure (A) according to any one of the preceding claims, wherein the tunnel frame (170) extends in the vehicle front-rear direction along an upper part of the tunnel (11).

7. The vehicle-body structure (A) according to claim 6, wherein
the tunnel frame (170) is formed such that a width of the tunnel frame (170) in a left-right direction increases toward a front side.

8. The vehicle-body structure (A) according to claim 6 or 7, wherein the tunnel frame (170) is fixed to the upper part of the tunnel (11), and one or more closed cross-sections (173) are formed between the tunnel frame (170) and the upper part of the tunnel (11).

9. The vehicle-body structure (A) according to any one of the preceding claims, wherein a left side of the tunnel frame (170) and a right side of the tunnel frame (170) are fixed to the tunnel (11).

10. The vehicle-body structure (A) according to any one of the preceding claims, wherein the tunnel frame (170) is divided into a plurality of members (171, 172).

11. The vehicle-body structure (A) according to any one of the preceding claims, wherein the tunnel frame (170) is divided into a front-side frame (171) constituting a front portion of the tunnel frame (170), and a rear-side frame (172) constituting a rear portion of the tunnel frame (170).

12. The vehicle-body structure (A) according to claim 11, wherein the front-side frame (171) is inclined such that the front-side frame (171) is positioned higher as it extends forward.

13. The vehicle-body structure (A) according to any one of the preceding claims, wherein the tunnel frame (170) extends in a straight line or substantially a straight line in the vehicle front-rear direction.

14. A vehicle (1) comprising the vehicle-body structure (A) according to any one of the preceding claims.

15. A method of manufacturing a vehicle-body structure (A), comprising:
integrally or unitarily molding, by casting, a front frame (50) including a right front suspension tower part (51) and a left front suspension tower part (52);
integrally or unitarily molding, by casting, a rear frame (100) including a right rear suspension tower part (110) and a left rear suspension tower part (120); and
providing a tunnel frame (170) that extends in a vehicle front-rear direction in a tunnel (11) and couples the front frame (50) and the rear frame (100), the tunnel (11) bulging upward from a floor panel (10).
